# FASCICULE DE BREVET EUROPEEN

(11) **EP 1 274 087 B1**
(45) Date de publication et mention de la délivrance du brevet: **11.07.2007**
(21) Numéro de dépôt: 02100439.5
(22) Date de dépôt: 02.05.2002
(51) Int. Cl.: G11B 27/28, G11B 27/10, G06F 17/30, G11B 27/34

(54) **Procédé de séquencage d'informations vidéo**
Verfahren zur Sequenzierung von Videoinformationen
Method for video information sequencing

(30) Priorité: 10.05.2001 FR 0106207
(43) Date de publication de la demande: 08.01.2003
(73) Titulaire: SAGEM Communication, 75015 Paris (FR)
(72) Inventeur: Venom, Didier, 95400 ARNOUVILLE LES GONESSE (FR); Cummings, John, 78600 MAISONS-LAFFITTE (FR)
(74) Mandataire: Schmit, Christian Norbert Marie

(56) Documents cités:
- EP-A- 0 690 413
- WO-A-99/36863
- DE-A- 19 859 087
- US-A- 5 485 611
- US-A- 5 537 530

## Description

La présente invention a pour objet un décodeur de télévision numérique équipé de moyens de séquençage d'informations vidéo. Elle a également pour objet un procédé de séquençage d'un ensemble d'informations vidéo mémorisé dans un module de mémoire de type disque dur. Par séquençage, on désigne l'opération consistant à découper, à fractionner, un contenu vidéo mémorisé dans un module de mémoire en une succession de séquences distinctes, parfois appelées chapitres.

L'invention peut être utilisée notamment pour permettre à un utilisateur d'un appareil électronique équipé d'un module de mémoire de type disque dur, par exemple un décodeur de télévision numérique, de pourvoir sélectionner rapidement une séquence d'un contenu vidéo, par exemple une séquence d'un film, préalablement enregistré dans le module de mémoire. A cet effet, l'invention met en oeuvre des moyens pour fractionner le contenu vidéo considéré afin d'obtenir une pluralité de séquences et de proposer un moyen d'identification de chaque séquence.

Chaque séquence ainsi obtenue se distingue de la séquence précédente et/ou de la séquence suivante par le fait qu'un changement significatif, radical, visible dans les images restituées, est intervenu entre un groupe d'images constituant la séquence considérée et la séquence suivante et/ou précédente. Typiquement, de tels changements sont observés lorsque l'on passe d'une scène d'un film à une autre scène où les éléments filmés sont différents. Pour détecter de tels changements, on analyse l'évolution d'une grandeur, dite grandeur statistique, qui correspond à une valeur moyenne des pixels d'une image ou d'une partie d'image de la séquence considérée. Le dépassement d'une valeur seuil, préalablement déterminée, par la grandeur statistique peut ainsi marquer le début d'une nouvelle séquence.

En d'autres termes, le procédé selon l'invention permet de réaliser automatiquement un découpage d'un contenu vidéo en un certain nombre de séquences, chaque séquence étant associée à une scène particulière et distincte dans la mesure où la scène considérée se caractérise par une constance relative dans la valeur des pixels constituant les images de la séquence associée à la scène. Par exemple, grâce à l'invention, un utilisateur d'un appareil de type décodeur de télévision numérique peut se voir proposer sur son écran de télévision un certain nombre de vignettes, dans chacune desquelles est affichée un image caractéristique d'une séquence distincte du contenu vidéo présent dans le module de mémoire de son appareil électronique. Il peut alors accéder directement à la séquence voulue en sélectionnant la vignette correspondante.

Dans l'état de la technique, on connaît désormais les lecteurs de disques vidéo numérique, appelés plus fréquemment lecteurs DVD. Ces lecteurs sont capables de lire les informations contenues sur un disque vidéo, appelé DVD, et permettent ainsi, par exemple, la visualisation d'un film. Différentes options dans l'utilisation des lecteurs DVD sont apparues. Parmi ces options, on dispose désormais de la possibilité d'accéder à un menu permettant d'afficher l'ensemble des chapitres, ou séquences, contenus dans le disque vidéo. A cet effet, différentes vignettes sont affichées sur un écran de télévision, chaque vignette présentant un image caractéristique de la séquence à laquelle elle est associée. Le plus souvent, une image présentée dans une vignette, désignant un séquence, correspond à la première image d'une nouvelle scène. Par ailleurs, le découpage en séquences est réalisé de façon homogène, c'est à dire de telle sorte que les différentes séquences aient sensiblement la même durée. Typiquement, on trouve pour un DVD d'environ deux heures une trentaine de séquences distinctes. Cependant, ce type de présentation des différentes scènes dans des vignettes doit préalablement faire l'objet d'un travail de sélection de chaque image à placer dans les différentes vignettes. Ce travail est effectué par le concepteur du DVD qui choisit d'extraire telle ou telle image pour marquer le début d'une séquence.

Par ailleurs, on connaît dans l'état de la technique certains logiciels de montage vidéo qui permettent, par exemple à partir d'une séquence vidéo filmée au moyen d'un caméscope, de sélectionner automatiquement certains moments du contenu vidéo qui a été filmé. Différentes images sont ainsi extraites du contenu vidéo, et sont proposées à un utilisateur qui peut alors décider d'accéder directement à la situation filmée débutant par l'image extraite considérée. A cet effet, différentes techniques peuvent être mises en place, et notamment une technique permettant de comparer, entre une image et l'image suivante, la grandeur statistique précédemment mentionnée, représentative des valeurs moyennes de chrominance et/ou de luminance de chaque pixel d'une image. Cette technique part du postulat que la détection d'une différence significative entre deux images consécutives révèle le passage à cet instant précis d'une première situation à une deuxième situation filmée, un tel changement de situation correspondant le plus souvent à une action nouvelle dans le film vidéo visualisé.

On réalise ainsi automatiquement un séquençage du contenu vidéo filmé. De tels logiciels sont utilisés essentiellement pour des films vidéo réalisés au moyen de caméscope car ils sont le plus souvent de très courte durée. Cette technique n'a cependant pas encore été adaptée pour une utilisation sur des contenus vidéo de longue durée, tels que ceux qu'on peut trouver sur un disque dur d'un décodeur de télévision numérique, le nombre de séquences distinctes extraites au moyen de ces logiciels existant serait beaucoup trop nombreux, et donc inexploitables par un utilisateur de l'appareil électronique considéré. En outre, même en adaptant l'analyse de l'évolution de la grandeur statistique, aucune homogénéité ne pourrait être obtenue dans le séquençage par l'utilisation directe de ces logiciels sur des disques durs de décodeurs de télévision numérique.

En conséquence, de tels logiciels ne peuvent pas être utilisés pour déterminer automatiquement les différents chapitres du contenu d'un disque vidéo numérique.

La présente invention permet de pallier les différents problèmes qui viennent d'être exposés. Grâce à elle, on peut obtenir un séquençage, comparable à celui disponible sur les disques DVD, pour un contenu vidéo contenu dans un module de mémoire de type disque dur; en outre, dans l'invention, le séquençage est mis en place automatiquement au sein de l'appareil électronique renfermant le module de mémoire considéré, en utilisant notamment des techniques d'analyse d'image comparables à celles utilisées dans les logiciels précédemment mentionnés, et en faisant intervenir d'autres paramètres.

Ainsi, le procédé et l'appareil électronique selon l'invention proposent une solution pour adapter de tels logiciels à une utilisation automatique sur un module de mémoire de type disque dur afin de s'affranchir de l'inconvénient selon lequel le nombre de séquences obtenues par l'utilisation directe de tels logiciels sur un disque dur serait trop important et/ou aboutirait à un séquençage non homogène, déséquilibré, du contenu vidéo du disque dur. L'invention résout ainsi le problème selon lequel une utilisation directe de tels logiciels conduirait à un fractionnement du contenu du disque dur en plusieurs séquences dont les durées respectives varieraient selon une trop grande amplitude, ce qui diminuerait leur intérêt d'utilisation. En effet, un utilisateur ne peut être réellement intéressé par un dispositif de séquençage lui permettant d'accéder directement à certaines séquences que si les points de départ de ces séquences, appelés jalons, sont répartis de façon homogène sur la totalité du contenu vidéo. En d'autres termes, le début de chaque séquence résultant du fractionnement doit être réparti sur la totalité du contenu du disque dur à des intervalles de temps à peu près réguliers.

Ainsi, dans l'invention, on tient compte de la durée de chaque séquence pour déterminer à quels moments doivent être disposés des jalons qui désignent une séquence par exemple en en marquant le début. Aussi, dans l'invention, trois paramètres essentiels entrent en jeu pour effectuer le séquençage du contenu du disque dur : le nombre de jalons à placer, correspondant au nombre de séquences à obtenir par l'opération de séquençage, une durée approximative de chaque séquence, et une valeur seuil de la grandeur statistique permettant de déterminer qu'un jalon doit être placé à l'instant du contenu vidéo où la valeur seuil est dépassée.

Différents modes de mise en oeuvre du procédé selon l'invention sont envisagés et détaillés. Chacun d'eux repose sur le caractère prioritaire, dans la réalisation du séquençage, de tel ou tel paramètre parmi ceux qui viennent d'être mentionnés. Ces différents modes seront détaillés par la suite. En outre, dans l'invention, on envisage de réaliser le séquençage d'un contenu vidéo du disque dur d'un appareil électronique pendant que l'appareil électronique considéré est dans un état de veille. Différents modes de présentation des jalons sont également envisagés. Les différents paramètres peuvent correspondre soit des valeurs par défaut, soit des valeurs décidées par un utilisateur.

L'invention a donc pour objet un procédé de séquençage d'un ensemble d'informations vidéo, composé de groupes d'informations vidéo chaque groupe correspondant à une image, pouvant être affichée sur un moyen de restitution, pour fractionner ledit ensemble en une pluralité de séquences, l'ensemble d'informations vidéo étant mémorisé dans un module de mémoire de type disque dur dans un appareil électronique.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- à la figure 1: une structure simplifiée d'un appareil électronique selon l'invention, ou permettant la mise en oeuvre du procédé selon l'invention;
- à la figure 2 : un organigramme d'une première mise en oeuvre possible du procédé selon l'invention ;
- à la figure 3 : un organigramme détaillant une deuxième mise en oeuvre possible du procédé selon l'invention ;
- à la figure 4, une schématisation de la disposition de jalons selon la deuxième mise en oeuvre du procédé selon l'invention.

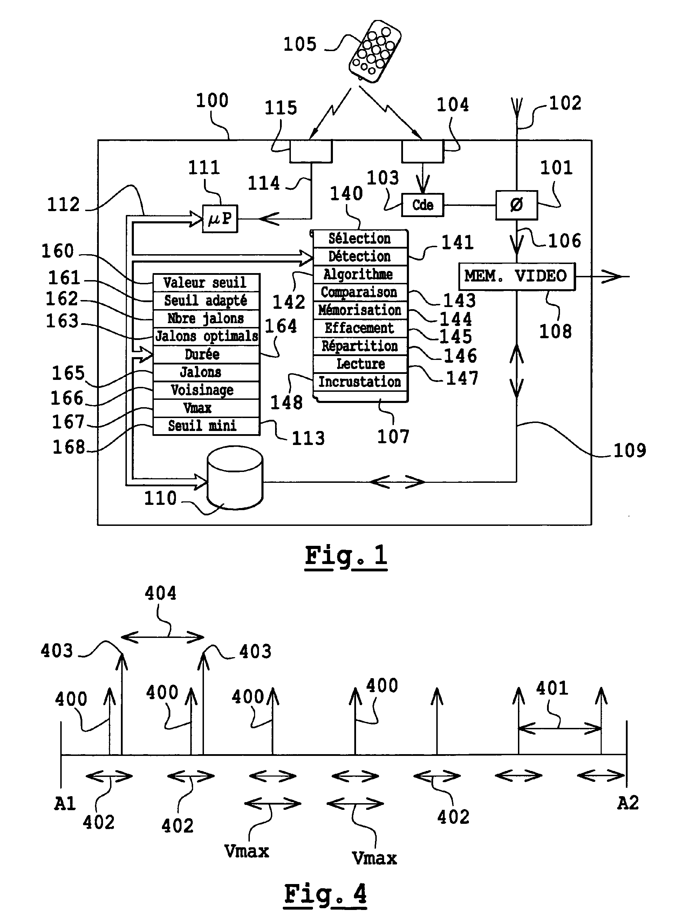

La figure 1 montre un appareil électronique 100 selon l'invention, dans le cas présent, un décodeur de télévision numérique. Le décodeur 100 comporte un module de réception 101 de signaux télévisuels qui reçoit via une antenne 102 un flux d'informations de programmes de télévision. Le module de réception 101 pourrait être également connecté à un réseau de télévision câblée ou à un système de réception par satellite. Par ailleurs, le module de réception 101 est connecté à un circuit de commande 103 du module de réception 101. Le circuit de commande 103 indique au module de réception 101 quel programme de télévision il doit extraire du flux d'informations qu'il reçoit par l'antenne 102. Dans le cadre d'une réception analogique traditionnelle, il s'agit de l'accord d'un oscillateur du module de réception 101 sur la fréquence de la porteuse qui porte les informations du programme de télévision qui doit être extrait. Les signaux analogiques reçus sont numérisés au sein du module de réception 101.

Un premier capteur 104, dans cet exemple infrarouge, reçoit des signaux émis par une télécommande 105. Une cellule infrarouge du premier capteur 104 délivre un signal qui permet à l'utilisateur de contrôler le circuit de commande 103. Les signaux numérisés issus du module de réception 101 sont envoyés dans une mémoire vidéo 108 via une liaison unidirectionnelle 106. La mémoire vidéo 108 stocke les différentes informations destinées à être restituées sur un écran de télévision. La mémoire vidéo 108 est par ailleurs reliée au moyen d'une liaison bidirectionnelle à un module de mémoire 110 de type disque dur. Il est ainsi possible de transmettre et de conserver dans le disque dur 110 des données extraites du flux d'informations reçues. Eventuellement, ces données peuvent être compressées avant mémorisation, puis décompressées lors de leur restitution. Le module de mémoire 110 a une grande capacité ; il peut typiquement mémoriser environ l'équivalent de huit heures de programme de télévision, voire plus.

Un microprocesseur 111 est relié au moyen d'un bus de communication bidirectionnel 112 à une mémoire de programmes 107, au disque dur 110, et à une mémoire de données 113. La mémoire de données 113 est notamment destinée à mémoriser différentes informations, valeurs ou paramètres nécessaires à la mise en oeuvre du procédé de séquençage selon l'invention. La mémoire de programmes 107 est notamment destinée à la gestion des différentes opérations qui peuvent intervenir pour mettre en oeuvre le procédé de séquençage. Elle comporte plusieurs applications, spécialement dédiées à l'invention, qui seront détaillées par la suite .

Dans d'autres modes de réalisation de l'appareil électronique selon l'invention, ces applications pourraient être remplacées par des circuits électroniques spécifiques. Le rôle de chacune de ces applications sera détaillé ultérieurement, conjointement à la description des autres figures.

Le microprocesseur 111 est par ailleurs relié au moyen d'une liaison unidirectionnelle 114 à un deuxième capteur 115 qui est de préférence semblable au premier capteur 104. Les deux capteurs 115 et 104 peuvent recevoir des signaux de la même télécommande 105. Le microprocesseur 111 contrôlant l'exécution des applications de la mémoire de programmes 107, l'utilisateur a ainsi la possibilité d'activer certaines applications, et notamment des applications ayant trait au procédé de séquençage. Dans une variante de l'invention, les deux capteurs 104 et 115 peuvent être confondus. Le bus de communication bidirectionnel 112 véhicule des signaux de commande, d'adresse ou de données. Toutes les autres liaisons représentées sont, dans la pratique, des bus de données qui assurent des échanges de données entre deux éléments de l'appareil décrit. Certaines de ces liaisons pourraient être intégrées dans le bus de communication bidirectionnel 112.

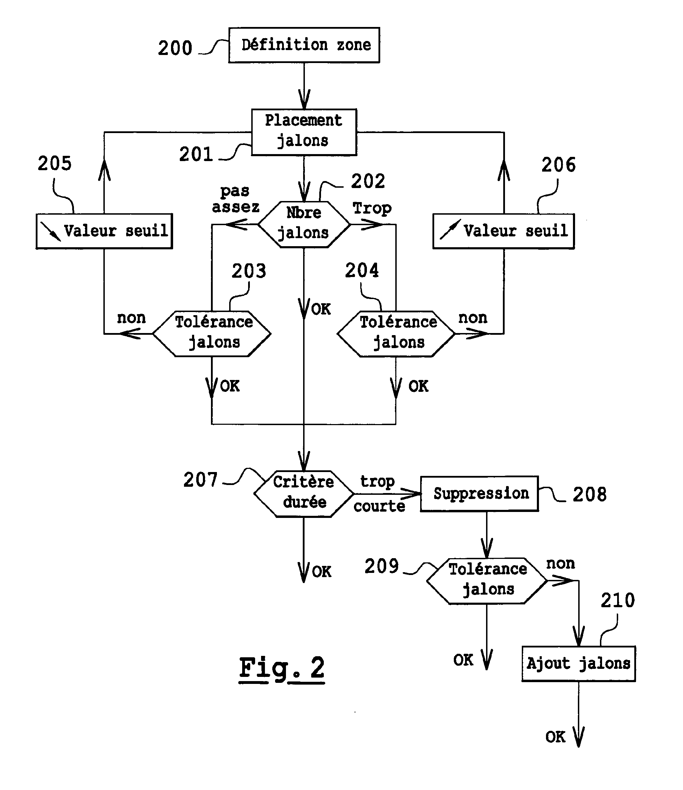

L'organigramme de la figure 2 illustre une premier mode de mise en oeuvre possible du procédé selon l'invention. Dans cette première mise en oeuvre, c'est le nombre de jalons à disposer sur le contenu du disque dur à séquencer qui est le critère prioritaire. Dans une première étape 200, l'utilisateur définit quel est le contenu vidéo du disque dur 110 qui doit faire l'objet du séquençage. Une application 140, dite de sélection, est mise en oeuvre à cet effet. Plusieurs possibilités peuvent être offertes à l'utilisateur pour qu'il sélectionne le contenu vidéo qui l'intéresse : il peut par exemple indiquer quelle est la première image et quelle est la dernière image qui constituent le contenu vidéo à séquencer. Le procédé selon l'invention tient évidemment compte du fait qu'un contenu vidéo continu peut être réparti dans des zones de mémoire du disque dur 110 dont les adresses mémoires ne se suivent pas nécessairement. Lorsque aucun contenu vidéo n'est sélectionné, le procédé de séquençage peut être mis en oeuvre sur la totalité des informations vidéo mémorisées dans le disque dur 110.

Dans une étape suivante 201, on procède au placement des jalons dès que l'on détecte une variation de la grandeur statistique est supérieure à une valeur seuil préalablement déterminée. A cet effet, une application 141 dite de détection, est mise en oeuvre. Cette application permet de scanner le contenu vidéo précédemment sélectionné et d'appliquer sur chaque groupe de données lues constituant une image un algorithme de calcul 142 pour attribuer, à partir des valeurs de chrominance et/ou de luminance des pixels de l'image, une valeur à la grandeur statistique pour cette image. Une application de comparaison 143 permet alors d'effectuer la différence entre deux valeurs statistiques associées à deux images statistiques, puis de comparer le résultat obtenu à une valeur seuil 160 mémorisée dans la mémoire de données 113. Si la différence obtenue est supérieure à la valeur seuil, un jalon est placé à cet endroit. La valeur seuil mémorisée intervenant dans l'opération de comparaison peut être une valeur par défaut ou une valeur mémorisée par un utilisateur. Par ailleurs, cette valeur est susceptible d'évoluer comme il le sera expliqué par la suite.

Dans différentes variantes, l'algorithme de calcul ne s'applique pas sur la totalité des pixels de l'image, mais sur une partie des pixels de l'image afin de limiter les calculs. Dans ce cas de figure, les pixels de l'image faisant l'objet des calculs doivent évidemment toujours être situés dans la même zone de l'image. Par ailleurs, il est possible de réaliser les calculs non plus sur une image ou une partie d'image, mais sur plusieurs images, ou parties d'image, consécutives ; la grandeur statistique n'est alors plus associée à une image, mais on dispose d'une grandeur statistique moyenne associée à un ensemble d'images.

Un certain nombre de jalons sont ainsi disposés en prenant pour seul critère la variation des valeurs des pixels. Les jalons ainsi déterminés sont alors mémorisés dans une zone 165 de la mémoire de données 113, au moyen d'une application de mémorisation 144. D'une façon générale, dès qu'un jalon apparaît ou disparaît, comme cela peut être le cas dans les différentes étapes qui vont suivre, la zone 165 de la mémoire de données 113 est mise à jour. L'étape suivante est une étape de décision 202 dans laquelle le nombre de jalons disposés lors de l'étape 201 est comparé au nombre de jalons initialement souhaité. Le nombre de jalons initialement souhaité est mémorisé dans un espace 162 de la mémoire de données 113. Ce nombre est une valeur par défaut ou une valeur mémorisée par l'utilisateur. S'il s'avère que le nombre de jalons disposés est insuffisant, respectivement trop important, une nouvelle étape de décision 203, respectivement 204, intervient dans laquelle on compare le nombre de jalons disposés au nombre de jalons souhaité en tenant compte d'une tolérance préalablement déterminée. Cette tolérance correspond à la possible existence de jalons dits optionnels, dont le nombre, mémorisé dans une zone 163 de la mémoire de données 113, est une valeur par défaut ou une valeur décidée et mémorisée par l'utilisateur.

Dans le cas où même en tenant compte de la tolérance sur le nombre de jalons, le nombre de jalons est insuffisant, respectivement trop important, une étape 205, respectivement 206, intervient dans laquelle la valeur seuil est diminuée, respectivement augmentée. Les opérations sont alors reprises au niveau de l'étape 201 mais avec une nouvelle valeur seuil, dite valeur seuil adaptée, mémorisée dans une zone 161 de la mémoire de données 113. Les étapes de décision 203 et 204 sont facultatives. On pourrait directement passer aux étapes d'augmentation de la valeur 206 ou de diminution de la valeur seuil 205 lorsque le nombre de jalons n'est pas assez important ou trop important. Cependant la présence des étapes de décisions 203 et 204 peut permettre, dans les cas où le nombre de jalons disposés dans l'étape 201 est compris dans la fourchette de tolérance, de limiter le nombre de calculs à effectuer.

Lorsque le nombre de jalons disposés correspond au nombre de jalons souhaité en tenant éventuellement compte de la tolérance, une étape de décision 207 intervient dans laquelle il est examiné si chaque séquence correspond au critère de durée souhaité. Ce critère a été préalablement défini et mémorisé, sous la forme d'une durée minimale à respecter, dans une zone 164 de la mémoire de données 113, soit par défaut, soit par l'utilisateur. L'application de comparaison 143 est de nouveau mise en oeuvre pour comparer la durée de chaque séquence à la durée minimale souhaitée.

Si chacune des séquences constituées correspond au critère de durée, alors le séquençage peut être considéré comme achevé. Si certaines séquences sont considérées comme étant trop courtes, une étape 208 intervient dans laquelle certains jalons sont supprimés. Une application d'effacement 145 est alors mise en oeuvre pour effacer ce jalon de la zone de mémoire 165. Les jalons supprimés sont ceux qui marquent le début ou la fin d'une séquence trop courte et, de préférence, qui constituent une des bornes de la plus courte des séquences parmi la séquence directement suivante de la séquence trop courte et la séquence précédant directement la séquence trop courte. Le mécanisme de suppression de jalons est tel que dans un cas de figure où deux séquences consécutives sont trop courtes, c'est le jalon intermédiaire qui est supprimé, c'est-à-dire le jalon marquant la fin d'une séquence déterminée, et le début de la séquence suivante.

Une fois cette étape de suppression de jalons supprimé, une étape de décision 209 intervient dans laquelle on s'assure que le nombre de jalons restant est le bon nombre de jalons ou éventuellement s'il est compris dans la fourchette défini par la tolérance sur le nombre de jalons. Si c'est le cas, le séquençage de séquence peut être considéré comme achevé. Si ce n'est pas le cas, le procédé selon l'invention prévoit, dans une étape 210, d'ajouter au milieu des séquences les plus longues un jalon. Cette opération est effectuée pour les x séquences les plus longues, x correspondant au nombre de jalons précédemment supprimés.

Le procédé selon l'invention ayant pour but essentiel de permettre à un utilisateur de se repérer rapidement dans un contenu vidéo, un critère de durée maximale d'une séquence peut sembler moins important qu'un critère de durée minimale de séquence. Cependant on peut envisager qu'un tel critère soit adopté, auquel cas différentes étapes sont prévues dans le procédé selon l'invention pour ajouter des jalons dans les séquences considérées comme trop longues, par exemple en leur milieu, tout en supprimant éventuellement des jalons constituant une des bornes des séquences comme étant les plus courtes.

Il peut paraître nécessaire dans certains cas d'obéir à certains critères définissant les durées des séquences : il peut notamment être utile de fixer une durée minimale de séquence qui soit inférieure à la moitié du temps moyen d'une séquence, le temps moyen étant défini comme le rapport entre la durée du contenu vidéo à séquencer divisé par le nombre de séquences souhaité.

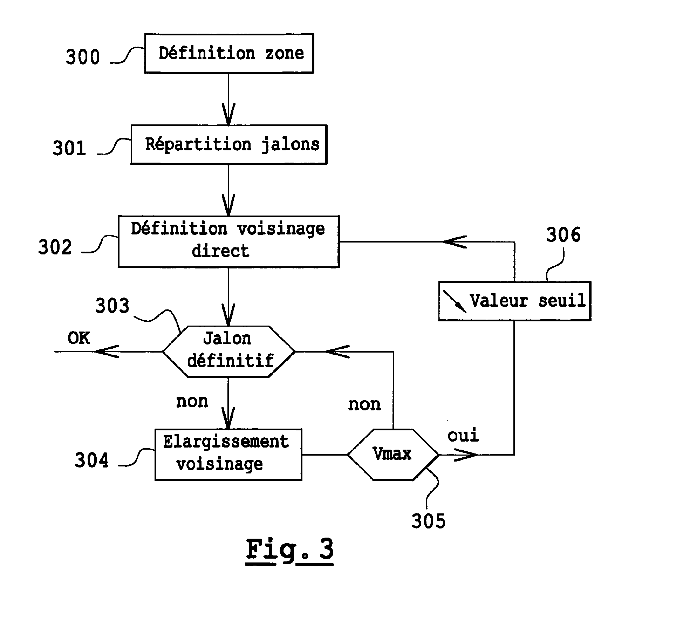

La figure 3, qui sera décrite conjointement à la figure 4, montre un organigramme qui illustre un deuxième mode de mise en oeuvre possible du procédé selon l'invention. Dans ce deuxième mode de mise en oeuvre, c'est l'homogénéité de la répartition des jalons qui est privilégiée. La première étape 300 est similaire à la première étape 200 du premier mode de mise en oeuvre. On obtient ainsi, pour le disque dur, une adresse A1 de début de séquençage et une adresse A2 de fin de séquençage. Dans une deuxième étape 301, on active une application de répartition 146 pour disposer des jalons provisoires 400 de telle sorte qu'ils soient équitablement répartis sur la durée totale du contenu à séquencer. En d'autres termes, les différents jalons provisoires sont disposés de telle sorte que tous les intervalles 401 compris entre deux jalons consécutifs du contenu vidéo à séquencer aient la même durée, cette durée correspondant au temps moyen précédemment défini.

Pour chaque jalon provisoire 400 disposé, on définit, dans une étape 302, un voisinage direct 402 de ce jalon : le voisinage direct correspond à un intervalle de temps situé de part et d'autre du jalon considéré, ce jalon constituant de préférence le milieu de cet intervalle de temps. La valeur de l'amplitude du voisinage est mémorisée, soit par défaut, soit par l'utilisateur, dans une zone 166 de la mémoire de données 113. Dans une étape suivante 303, on active l'application de détection 141 et l'algorithme de calcul précédemment détaillés. A la différence du premier mode de mise en oeuvre, cette application et cet algorithme ne sont appliqués que pour les images appartenant aux voisinages directs des jalons, et non plus sur la totalité du contenu vidéo à séquencer. Lorsqu'un dépassement de la valeur seuil est trouvé dans le voisinage direct d'un jalon provisoire, on obtient un jalon définitif 403 qui est placé à cet endroit. L'intervalle défini entre deux jalons définitifs 403 constitue une séquence 404.

Pour tous les jalons provisoires disposés lors de l'étape 301 et pour lesquels aucun dépassement de la valeur seuil n'a été détecté dans leur voisinage direct, c'est à dire qu'ils n'ont pas été transformés en jalons définitifs, deux solutions sont envisagées dans ce mode de mise en oeuvre: la première solution consiste à élargir progressivement, dans une étape 304, le voisinage direct pour ces jalons provisoires considérés. On vérifie alors, dans une étape de décision 305, si, pour chaque jalon provisoire, le voisinage direct a atteint une valeur maximale Vmax préalablement déterminée. Le procédé est alors repris, uniquement pour ces jalons, à l'étape 303, mais avec un voisinage direct plus large sur lequel la recherche du dépassement de la valeur seuil va être effectuée. Si le voisinage direct a atteint une valeur maximale, on procède dans ce cas à un abaissement de la valeur seuil dans une étape 306 et on recommence, à partir de l'étape 302, la recherche d'un dépassement de valeur seuil, mais avec la nouvelle valeur seuil, tout d'abord dans le voisinage direct de chaque jalon provisoire, puis en élargissant de nouveau ce voisinage direct. La valeur de l'amplitude maximale à ne pas dépasser a été préalablement mémorisée dans une zone 167 de la mémoire de données 113, soit avec une valeur par défaut, soit avec une valeur décidée par l'utilisateur.

Dans une deuxième solution, dans un premier temps, on diminue progressivement la valeur seuil. Si aucun dépassement de valeur seuil n'a pu être constaté avant qu'une valeur seuil minimale préalablement définie, et mémorisée dans une zone 168 de la mémoire de données 113, ne soit atteinte, on recommence, dans un deuxième temps, la recherche d'un dépassement de valeur seuil avec la valeur seuil initiale, mais sur un voisinage plus large. Ce voisinage est également progressivement élargi tant que la recherche de dépassement de valeur seuil demeure infructueuse, jusqu'à un étalement maximal du voisinage qui aura été préalablement défini.

Le procédé selon la seconde méthode présente l'avantage de ne pas avoir à effectuer systématiquement des calculs sur l'ensemble du contenu à séquencer. En outre, si les voisinages de chaque jalon initialement placés présentent une faible amplitude, seule une faible partie du contenu vidéo à séquencer fera l'objet de calculs.

Le procédé selon l'invention prévoit de rendre facilement accessible les différentes séquences débutant avec chaque jalon. Dans la zone mémoire 165, seules des adresses indiquant à quel endroit du contenu vidéo il faut placer les jalons ont été mémorisées. Une fois la disposition définitive des jalons achevée, une application de lecture 147 est activée dans laquelle le contenu de ces adresses est lu. Ce contenu correspond à des informations vidéo correspondant à une image. Ensuite, pour chaque jalon disposé, on utilise une application dite d'incrustation 148 pour afficher dans des fenêtres graphiques, ou vignettes, apparaissant sur l'écran l'image associée au jalon. Dans certains modes de mise en oeuvre, l'image affichée dans la vignette a une basse résolution, c'est à dire inférieure à celle de l'image affichée sur la totalité de l'écran, ceci pour limiter les calculs mis en oeuvre par l'application d'incrustation 148. Dans d'autres modes de mise en oeuvre, les images affichées dans les vignettes ne marquent pas le début d'une séquence, mais par exemple le milieu de cette séquence. Un calcul supplémentaire aura été préalablement réalisé à cet effet afin de déterminer, à partir de deux jalons délimitant une séquence, où se situe le milieu de cette séquence.

Enfin, de préférence, les différentes étapes du procédé selon l'invention sont mises en oeuvre lorsque le décodeur de télévision numérique est dans un état de veille, c'est à dire qu'il n'est pas dans une situation d'extraction de signaux du flux de signaux reçus.

## Revendications

1. - Procédé de séquençage d'un ensemble d'informations vidéo, composé de groupes d'informations vidéo chaque groupe correspondant à une image, pouvant être affichée sur un moyen de restitution, pour fractionner ledit ensemble en une pluralité de séquences, chaque séquence étant comprise entre deux jalons, l'ensemble d'informations vidéo étant mémorisé dans un module de mémoire (110) de type disque dur dans un appareil électronique (100), **caractérisé en ce qu**'il comporte les différentes étapes consistant à :
- définir (200 ;300) l'ensemble d'informations vidéo à séquencer;
- définir un premier paramètre (164) déterminant une durée approximative d'une séquence ;
- définir un deuxième paramètre (162) déterminant un nombre de jalons à placer sur l'ensemble d'informations vidéo à séquencer ;
- placer un jalon provisoire marquant le début d'une séquence considérée à chaque fois qu'une grandeur statistique représentative des valeurs de pixels entre un élément d'image et un élément d'image suivant est supérieure à une valeur seuil préalablement déterminée ;
- comparer (202) le nombre de jalons provisoires au deuxième paramètre ;
- pour un nombre de jalons provisoires supérieur, respectivement inférieur, au nombre de jalons à placer, augmenter (206), respectivement diminuer (205), la valeur seuil et répéter l'étape (201) de placement des jalons provisoires et l'étape (202) de comparaison entre le nombre de jalons provisoires et le deuxième paramètre jusqu'à obtenir un nombre de jalons provisoires correspondant au deuxième paramètre ;
- comparer (207) la durée de chaque séquence, comprise entre deux jalons provisoires, au premier paramètre ;
- supprimer (208) les jalons provisoires créant des séquences de durée inférieure à une durée minimale souhaitée ;
- comparer (209) le nombre de jalons provisoires restant au deuxième paramètre ; si le un nombre de jalons provisoires restant est inférieur au nombre de jalons à placer, ajouter (210) des jalons provisoires dans les séquences les plus longues jusqu'à obtenir un nombre de jalons provisoires correspondant au deuxième paramètre ;
- fractionner l'ensemble d'informations vidéo en mémorisant (165), pour chaque séquence de la pluralité de séquences, un jalon (403) correspondant au jalon provisoire marquant le début de la séquence considérée.

2. - Procédé selon la revendication 1 **caractérisé en ce que** le deuxième paramètre correspond à un nombre de jalons souhaité assorti d'une tolérance préalablement déterminée.

3. - Procédé selon l'une des revendications précédentes **caractérisé en ce que** la définition des paramètres de durée approximative (164) d'une séquence (404) et de nombre de jalons (162) sont des valeurs mémorisées dans une unité de mémoire (113) de l'appareil électronique (100), et utilisées par défaut.

4. - Procédé selon l'une des revendications 1 ou 2 **caractérisé en ce que** la définition des paramètres de temps de durée approximatif (164) d'une séquence (404) et de nombre de jalons (162) sont des valeurs choisies par un utilisateur de l'appareil électronique (100).

5. - Procédé selon l'une des revendications précédentes **caractérisé en ce que** le premier paramètre (164) est défini avec une certaine tolérance.

6. - Procédé selon l'une des revendications précédentes **caractérisé en ce qu'**un jalon (403) marquant le début d'une séquence (404) est mémorisé sous la forme d'une adresse désignant l'image de début de la séquence considérée.

7. - Procédé selon l'une des revendications 1 à 5 **caractérisé en ce qu'**un jalon (403) marquant le début d'une séquence (404) est restitué sous la forme d'informations vidéo correspondant à une image de la séquence considérée.

8. - Procédé selon la revendication précédente **caractérisé en ce que** l'image est la première image de la séquence considérée.

9. - Procédé selon l'une des revendications 1, 2, 3, 4, 6 ou 7 **caractérisé en ce qu**'un jalon (403) marquant le début d'une séquence (404) est restitué, pour chaque séquence considérée, sous la forme d'informations vidéo correspondant à une image de basse résolution.

10. - Procédé selon l'une des revendications précédentes **caractérisé en ce que** les différentes étapes du procédé sont mises en oeuvre lorsque le l'appareil électronique (100) est dans un état de veille.

11. - Procédé selon l'une des revendications précédentes **caractérisé en ce que** l'appareil électronique (100) est un décodeur de télévision numérique.

## Claims

1. A method for sequencing a set of video data, comprised of groups of video data, each group corresponding to an image, that may be displayed on a reproduction means, to split said set into a plurality of sequences, each sequence being comprised between two range markers, the set of video data being stored in a hard disk type memory module (110) in an electronic apparatus (100), **characterized in that** the method comprises different steps consisting of:
- defining (200; 300) the set of video data to sequence;
- defining a first parameter (164) determining an approximate sequence duration;
- defining a second parameter (162) determining a number of range markers to place on the set of video data to sequence;
- placing a provisional range marker marking the start of a sequence considered each time that a statistical size representative of the pixel values between an image element and a following image element is greater than a previously determined threshold value;
- comparing (202) the number of provisional range markers to the second parameter;
- for an upper or lower, respectively, number of provisional range markers, to the number of range markers to place, respectively increase (206), or decrease (205) the threshold value and repeat the step (201) of placing provisional range markers and the step (202) of comparing the number of provisional range markers to the second parameter until a number of provisional range markers corresponding to the second parameter is obtained;
- comparing (207) the duration of each sequence, between two provisional range markers, to the first parameter;
- eliminating (208) the provisional range markers creating sequences with durations lower than a minimum desired duration;
- comparing (209) the number of remaining provisional range markers to the second parameter; if a number of remaining provisional range markers is less than the number of range markers to place, add (210) provisional range markers in the longest sequences until a number of provisional range markers corresponding to the second parameter is obtained;
- split the set of video data by storing (165), for each sequence from the plurality of sequences, a range marker (403) corresponding to the provisional range marker marking the start of the relevant sequence.

2. The method according to claim 1, **characterized in that** the second parameter corresponds to a number of desired range markers including a previously determined tolerance.

3. The method according to one of the previous claims, **characterized in that** the definition of parameters of approximate duration (164) of a sequence (404) and of the number of range markers (162) are values stored in a memory unit (113) of the electronic apparatus (100), and utilized by default.

4. The method according to one of claims 1 or 2, **characterized in that** the definition of parameters of approximate time duration (164) of a sequence (404) and the number of range markers (162) are values chosen by a user of the electronic apparatus (100).

5. The method according to one of the previous claims, **characterized in that** the first parameter (164) is defined with a certain tolerance.

6. The method according to one of the previous claims, **characterized in that** a range marker (403) marking the start of a sequence (404) is stored in the form of an address designating the image of the start of the sequence considered.

7. The method according to one of claims 1 to 5, **characterized in that** a range marker (403) marking the start of a sequence (404) is reproduced in the form of video data corresponding to an image from the sequence considered.

8. The method according to the previous claim, **characterized in that** the image is the first image from the sequence considered.

9. The method according to one of claims 1, 2, 3, 4, 6 or 7 **characterized in that** a range marker (403) marking the start of a sequence (404) is reproduced, for each sequence considered, in the form of video data corresponding to a low resolution image.

10. The method according to one of the previous claims, **characterized in that** the different steps of the method are implemented when the electronic apparatus (100) is in a standby state.

11. The method according to one of the previous claims, **characterized in that** the electronic apparatus (100) is a digital television decoder.

## Patentansprüche

1. Verfahren zur Folgeschaltung einer Gesamtheit von Videoinformationen, bestehend aus Videoinformationsgruppen, wobei jede Gruppe einem Bild entspricht, das auf einem Wiedergabemittel angezeigt werden kann, um die Gesamtheit in eine Vielzahl von Folgen zu untereilen, wobei jede Folge zwischen zwei Richtpunkten enthalten ist, wobei die Gesamtheit von Videoinformationen in einem Speichermodul (110) vom Typ Magnetplatte in einem elektronischen Gerät (100) gespeichert ist, **dadurch gekennzeichnet, dass** es verschiedene Schritte umfasst, darin bestehend:
- die Gesamtheit von in Folge zu schaltenden Videoinformationen zu definieren (200; 300);
- einen ersten Parameter (164) zu definieren, der eine annähernde Dauer einer Folge bestimmt;
- einen zweiten Parameter (162) zu definieren, der eine Anzahl von Richtpunkten bestimmt, die auf der Gesamtheit von in Folge zu schaltenden Videoinformationen anzuordnen sind;
- einen vorläufigen Richtpunkt anzuordnen, der den Beginn einer betreffenden Folge kennzeichnet, immer wenn eine statistische Größe, die für die Pixelwerte zwischen einem Bildelement und einem folgenden Bildelement repräsentativ ist, größer als ein vorher bestimmter Schwellenwert ist;
- die Anzahl von vorläufigen Richtpunkten mit dem zweiten Parameter zu vergleichen (202);
- für eine Anzahl von vorläufigen Richtpunkten, die größer bzw. kleiner als die Anzahl von anzuordnenden Richtpunkten ist, den Schwellenwert zu erhöhen (206) bzw. zu verringern (205) und den Schritt (201) der Anordnung von vorläufigen Richtpunkten und den Schritt (202) des Vergleichens zwischen der Anzahl von vorläufigen Richtpunkten und dem zweiten Parameter zu wiederholen, bis eine Anzahl von vorläufigen Richtpunkten erhalten wird, die dem zweiten Parameter entspricht;
- die Dauer jeder Folge, die zwischen zwei vorläufigen Richtpunkten enthalten ist, mit dem ersten Parameter zu vergleichen (207);
- die vorläufigen Richtpunkte, die Folgen von einer geringeren Dauer als eine gewünschte Mindestdauer erzeugen, wegzulassen (208);
- die Anzahl von restlichen vorläufigen Richtpunkten (209) mit dem zweiten Parameter zu vergleichen; wenn die Anzahl von vorläufigen Richtpunkten kleiner als die Anzahl von anzuordnenden Richtpunkten ist, vorläufige Richtpunkte in die längsten Sequenzen hinzuzufügen (210), bis eine Anzahl von vorläufigen Richtpunkten erreicht ist, die dem zweiten Parameter entspricht;
- die Gesamtheit von Videoinformationen zu unterteilen, wobei für jede Folge der Vielzahl von Folgen ein Richtpunkt (403) gespeichert wird (165), der dem vorläufigen Richtpunkt entspricht, der den Beginn der betreffenden Sequenz kennzeichnet.

2. Verfahren nach Anspruch 1, **dadurch gekennzeichnet, dass** der zweite Parameter einer gewünschten Anzahl von Richtpunkten entspricht, zuzüglich einer vorher bestimmten Toleranz.

3. Verfahren nach einem der vorhergehenden Ansprüche, **dadurch gekennzeichnet, dass** die Definition der Parameter der annähernden Dauer (164) einer Folge (404) und der Anzahl von Richtpunkten (162) Werte sind, die in einer Speichereinheit (113) des elektronischen Geräts (100) gespeichert sind und in Ermangelung verwendet werden.

4. Verfahren nach einem der Ansprüche 1 oder 2, **dadurch gekennzeichnet, dass** die Definition der Parameter der Zeit der annähernden Dauer (164) einer Folge (404) und der Anzahl von Richtpunkten (162) Werte sind, die von einem Benutzer des elektronischen Geräts (100) ausgewählt werden.

5. Verfahren nach einem der vorhergehenden Ansprüche, **dadurch gekennzeichnet, dass** der erste Parameter (164) mit einer gewissen Toleranz definiert wird.

6. Verfahren nach einem der vorhergehenden Ansprüche, **dadurch gekennzeichnet, dass** ein Richtpunkt (403), der den Beginn einer Folge (404) kennzeichnet, in Form einer Adresse gespeichert ist, die das Bild des Beginns der betreffenden Sequenz bezeichnet.

7. Verfahren nach einem der Ansprüche 1 bis 5, **dadurch gekennzeichnet, dass** ein Richtpunkt (403), der den Beginn einer Sequenz (404) kennzeichnet, in Form von Videoinformationen, die einem Bild der betreffenden Sequenz entsprechen, wiedergegeben wird.

8. Verfahren nach dem vorhergehenden Anspruch, **dadurch gekennzeichnet, dass** das Bild das erste Bild der betreffenden Sequenz ist.

9. Verfahren nach einem der Ansprüche 1, 2, 3, 4, 6 oder 7, **dadurch gekennzeichnet, dass** ein Richtpunkt (403), der den Beginn einer Sequenz (404) kennzeichnet, für jede betreffende Sequenz in Form von Videoinformationen wiedergegeben wird, die einem Bild mit niedriger Auflösung entsprechen.

10. Verfahren nach einem der vorhergehenden Ansprüche, **dadurch gekennzeichnet, dass** die verschiedenen Schritte des Verfahrens eingesetzt werden, wenn sich das elektronische Gerät (100) in einem Bereitschaftszustand befindet.

11. Verfahren nach einem der vorhergehenden Ansprüche, **dadurch gekennzeichnet, dass** das elektronische Gerät (100) ein digitaler Fernsehdecoder ist.
